# EUROPEAN PATENT SPECIFICATION

(11) **EP 2 004 377 B1**
(45) Date of publication and mention of the grant of the patent: **21.09.2011**
(21) Application number: 07722977.1
(22) Date of filing: 28.02.2007
(51) Int. Cl.: B29C 43/00, B29C 51/14, B65D 1/34

(54) **COMPRESSION MOULDING FLUFFY CELLULOSIC MATERIAL**
FORMPRESSEN VON FLOCKIGEM ZELLULOSEMATERIAL
MATÉRIAU CELLULOSIQUE DUVETEUX POUR MOULAGE PAR COMPRESSION

(30) Priority: 14.03.2006 IT MI20060447
(43) Date of publication of application: 24.12.2008
(73) Proprietor: Paper Technologies S.R.L., 20122 Milano (IT)
(72) Inventor: ANGHILERI, Gianmario, I-20122 Milano (IT); NYBOM, Lars, Goran, S-616 90 Aby (SE)
(74) Representative: Ponzellini, Gianmarco
(86) International application number: PCT/EP2007/001724
(87) International publication number: WO 2007/104431

(56) References cited:
- EP-A- 0 621 188
- WO-A-02/42070
- BE-A- 665 468
- DE-A1- 4 313 334

## Description

### TECHNICAL FIELD

The present invention relates in general to a method for producing at least one product or object and an arrangement therefore as defined in the preamble of claims 1 or 14. Such a method or arrangement is known from WO-A-02/42070.

The expression "product" in this text is intended to cover a semi-manufacture structure, which must be treated further in one or more processing steps for forming an object, and the expression "object" in this text is intended to cover a finished or completed object ready for its intended use.

More precisely, the present invention is relates to a method for forming at least one product in a compression moulding procedure or step using one or more female parts and one or more male parts, however, the description is concentrated towards the use of one female part only and a corresponding male part only, and when these parts are in a fully united and interacting position they form a space, mentioned in the succeeding description and claims as a "cavity", having an inner shape similar to, or corresponding to, the outer and inner shape or design of said product or of said object.

It is especially suggested that the method shall be based upon the following steps:
a) a layer of a fluffy material structure to which is added and/or mixed a glue liquid content is to be introduced between opened mould parts,
b) one or both mould parts are thereafter moved towards each other, to enclose a section of said fluffy material structure and a chosen glue liquid content,
c) said fluffy material structure and said glue liquid content are caused to be displaced towards and into said cavity, in order to compressing said fluffy material structure portion and said glue liquid content by said male part and its related wall sections against inner surfaces of said female part, and its related wall section.
d) both mould parts are thereafter conveyed or moved back towards and into an open initial position.

### BACKGROUND OF THE invention

Methods, arrangements and designs of the above-outlined nature are previously known in the art in a plurality of different embodiments.

As a first example of the state of the art and the technical field, to which the present invention relates, reference might be made to the content of International Patent Application PCT/SE01/02582 (publication Number WO-A1-02/42070), in which it is shown and disclosed a method and an arrangement for producing one or several products, by means of a compression moulding procedure, using at least two mould parts arranged to move towards and away from each other.

Said product having a framework or a support consisting of a fibrous material, at least one surface part being covered, when necessary, by a layer creating a barrier, such as a foil or film resistant to gas or moisture, e.g. a plastic foil or film, and said mould parts, when fully united, exposing an inner cavity, with defining outer and inner surfaces partially or entirely following the shape of a produced product or an object.

The successive steps related to the known method are:
a) that an elongate foil or film, with a layer of a compressive material, formed to a fluffy material structure, as a portion resting thereon, is allowed to be introduced between opened mould parts,
b) that the mould parts are to be united or moved towards each other to enclose a foil or film portion and a corresponding fluffy material portion and press a fluffy material structure as a "string", surrounding said foil or film portion against and along a defining line or area, corresponding to an edge oriented defining line or area for the product or the object,
c) that said foil or film portion, with a fluffy material structure portion applied and supported thereon, and surrounded by said mould parts, is caused to be displaced towards and into a cavity, formed within one of the used mould parts (female part) having an inner shape corresponding partially or completely to the outer shape of the product or object in order, by means of a means influencing the foil or film portion, to pressing said fluffy material structure portion into and against the inner surface of the female exposing mould part, and
d) that the mould parts , the female part and the foil or film part, are thereafter conveyed or moved towards their open initial position, for exposure of a compressed non-deformable product or non-deformable products or objects.

Especially it is disclosed that said means, in accordance with step "c", consists of an elastic foil or film portion, influenced by air or gas under a positive pressure, for pressing the fluff material structure into and towards an inner wall section related to said female part.

Considering the objects related to the present invention it is also to be mentioned different methods for the production of one or more of a plurality of different thin-walled products or objects, such as packaging objects, intended to enclose one or several items, in which the material of the objects may be aluminium, plastic and/or fibre material.

Since the present invention is based primarily on the production of packaging products or objects of disposable types, and makes use of a fibrous material structure as a starting and frame or support material, only this application will be considered in detail.

Thus, various methods are already known for producing packaging products or objects of different shapes from a fibrous material, such as wood fibre.

The method chosen for this depends on the choice of starting material, desired production speed, desired structure and shape of the end product or object, as well as other criteria.

One such previously known method for producing products from a wood fibrous pulp material is based on a technique that may be termed "pulp moulding" and is based on a "wet" method.

In an established method this "pulp moulding" is performed by using a stock or grist, a wood fibrous material or similar material, dissolved in water, together with selected additives, such as adhesive, etc., through a forming tool, having a shape complementary to the outer shape of the product or object, the wood fibrous material adhering to the surface of the tool, while the pulp dissolving water passes through perforations in the forming tool.

It is here usual for the wood fibrous concentration to be as low as 0,5-1%, which means that 200 to 100 times as much water must be handled.

Furthermore, in this known technology, forming tools must be made of a stainless material.

The forming tool must also be provided with uniformly distributed perforations in the form of small holes for the passage of said pulp water. Experience has shown that, for satisfactory function, these holes must be tightly drilled and well distributed, with a diameter of around 1 to 2 mm.

Furthermore, the use of such forming tools requires a complementary surface facing the product to be covered with a wire net or cloth and this, too, must be of stainless material.

It is known that the drilling of all these small holes, as well as shaping and applying a wire net or cloth structure, require qualified, expensive manual labour.

Such a tool must withstand water, fibres, chemicals, vacuum and at least a certain amount of pressure.

The wire net or cloth must also be so strongly dimensioned that the product or object produced, in the form of a fibrous "cake", can be released from the net or cloth.

The need for cleaning the wire net or cloth structure, etc., as well as the rest of the forming tool, is thus considerable.

After this type of moulding, a semi-manufacture must be transferred, or wet-pressed and transferred to a drier, or after-pressing and/or drying must be performed immediately between hot tool halves.

Such tool halves, necessary for a subsequent treatment, must also be made of a stainless material, be drilled with small holes and otherwise be shaped to give the product or object its final shape.

It is also known that during the time sequence the semi-manufacture product dries its dimensions also reduce or shrink, which generally requires that the tool, used for a subsequent treatment, is to be adapted or suited to the relevant dimensions.

The drying Sequence used in this method is expensive and requires a considerable amount of energy.

The content of patent publication US-A-4 337 116 also belongs to the prior art and shows a fibre-cast or pulp mould packaging product, consisting of wood fibre material and provided with a polyester layer.

The prior art may also be supplemented by the content of the patent publication number WO-A1-97/19803, showing and describing how a woven textile material can be compressed to a three-dimensional shape, with the aid of a thermoplastic with a hollow shape, where a layer of adhesive is used to hold the thermoplastic layer together with the textile material.

It also known from document EP 0621188 a method for making a multilayered packaging tray having layers bonded to one another with good adesion for receiving foods secreting fluid, having a liquid-impermeable based layer of plastic, forming the outer side of the packaging tray, a liquid-permeably designed outer layer of plastic, forming the inner side of the packaging tray and an inlay formed between the base layer and the outer layer with a layer of hotmelt adhesive applied on the base layer and a layer of moisture-absorbing polymers applied hereupon and a covering layer of a non-woven.

### CONSIDERATION OF THE PRESENT INVENTION

### TECHNICAL PROBLEM

Considering the circumstance that the technical deliberations that must be made by a person skilled in the art to be able to offer a solution to one or more technical problems posed is, on the one hand, initially a necessary insight into the measures and/or sequence of measures to be adopted and, on the other hand, a necessary selection of the means required, the following technical problems are likely, in view hereof, to be relevant in the evolution and development of the subject matter related to the present invention.

Considering the state of the art, as described above, it should therefore be seen as a technical problem to be able to realise, in a method and an arrangement, adapted for producing one or several products or one or several objects, by means of a compression moulding procedure, using at least two mould parts, one female part and one male part, arranged movably towards and away from each other, whereby said mould parts, in a fully united and interacting position, is exposing an inner cavity, with defining surfaces or wall sections, following the shape of said product or said object, whereby;
a) a layer of a fluffy material structure is to be introduced between opened mould parts,
b) said mould parts are thereafter moved towards each other to enclose a section of said fluffy material structure and a chosen glue liquid content,
c) said fluffy material structure and said glue liquid content are displaced towards and into said cavity, in order to compressing said fluffy material structure portion and a glue liquid content into a compressed cellulose material structure by a male part related wall section, against an inner surface or wall section of said female part, and
d) the mould parts are moved towards and into an open position, to expose and extract said product or said object,
the importance of, the advantages associated with and/or the technical measures and considerations which will be required in order to have said mould parts to move to said fully united position and exposing said cavity, whereby the volume of said cavity is chosen smaller than said compressed cellulose material structure and said chosen glue liquid content, and that said glue liquid content is chosen sufficient for, under said pressure from said mould parts, fully moistening said compressed cellulose material structure.

There resides a technical problem in being able to realise the importance of, the advantages associated with and/or the technical measures and considerations which will be required in order to, in an after-treatment step, having one or more products subject to a finishing treatment, for forming the outer and/or the inner shape of the product, towards a form of an object.

There resides a technical problem in being able to realise the importance of, the advantages associated with and/or the technical measures and considerations which will be required in order to have said glue liquid content and said compressible fluff material structure distributed as a pre-mixture or layers over a flexible carrier material supported by a male part.

There resides a technical problem in being able to realise the importance of, the advantages associated with and/or the technical measures and considerations which will be required in order to forming a semi-manufacture of said product, moistened to a "saturation" stage, and placing said semi-manufacture product in a subsequent after-treatment equipment for drying and/or setting said glue liquid content for forming a solid product or object.

There resides a technical problem in being able to realise the importance of, the advantages associated with and/or the technical measures and considerations which will be required in order to have a utilised glue liquid content being selected from a liquid having a viscosity of less than 500 mPas, such as from 50 to 200 mPas.

There resides a technical problem in being able to realise the importance of, the advantages associated with and/or the technical measures and considerations which will be required in order to have said male part adapted to be displaced upwardly, in order to lift a flexible carrier section with associated fluff material structure and its glue liquid content, enclosed between said mould parts, into and towards a female part, located above said flexible carrier section.

There resides a technical problem in being able to realise the importance of, the advantages associated with and/or the technical measures and considerations which will be required in order to have said male part adapted to be displaced downwardly, in order to urge a fluff material structure and its glue liquid content, enclosed between mould parts, and a flexible carrier section downwards towards and into a female part, located beneath said carrier section.

There resides a technical problem in being able to realise the importance of, the advantages associated with and/or the technical measures and considerations which will be required in order to have a semi-manufacture product and/or a dried semi-manufactured product finally formed as a completed or final object, by one or more subsequently oriented steps, such as an compression and/or punching stations.

There resides a technical problem in being able to realise the importance of, the advantages associated with and/or the technical measures and considerations which will be required in order to have resin, water glass, starch or the like, wholly or partly selected as said glue liquid content, for all materials serving as an adhesive material adapted to a used cellulose fluff structure.

There resides a technical problem in being able to realise the importance of, the advantages associated with and/or the technical measures and considerations which will be required in order to have an adhesive material, exposing a high total solid content, being selected as said glue liquid content.

There resides a technical problem in being able to realise the importance of, the advantages associated with and/or the technical measures and considerations which will be required in order to have, in a subsequent after-treatment process step, a plastic film, different or separated from any carrier material, being secured to one side of a dried and ready-treated semi-manufacture product, in order to form a solid object.

There resides a technical problem in being able to realise the importance of, the advantages associated with and/or the technical measures and considerations which will be required in order to have a subsequent additional plastic film and said carrier section of said carrier material secured, by means of a heating process of said semi-manufacture product, during a compression force, acting against an inner portion of said semi-manufacture product, takes place by using an excess air pressure arrangement.

There resides a technical problem in being able to realise the importance of, the advantages associated with and/or the technical measures and considerations which will be required in order to have said fluff material structure being selected from a material consisting of a pure cellulose fluff structure and/or a mixture of one or more cellulose fluff materials and a selected filler material, and as said filler material is selected materials as chalk, synthetic fibre material or the like.

There resides a technical problem in being able to realise the importance of, the advantages associated with and/or the technical measures and considerations which will be required in order to have said fluff material structure layered with interjacent oriented glue liquid content layers and/or product and object reinforcing layers.

There resides a technical problem in being able to realise the importance of, the advantages associated with and/or the technical measures and considerations which will be required in order to have an equipment, adapted for drying and/or setting said compressed cellulose material structure mixed with said glue liquid content, consisting of a unit based on microwave heating.

### SOLUTION

The present invention thus takes as its starting point the state of the art as disclosed by way of introduction and relates to a method and an arrangement for producing at least one product or object as defined in the preamble of appended claims 1 or 14.

In order to be able to solve one or more of the above-outlined technical problems, the present invention proposes that the prior art is to be supplemented by the steps or the arrangement means as defined by the characterising part of claim 1 or claim 14.

Preferred embodiments are disclosed in the subclaims.

### ADVANTAGES

The advantages which may principally be considered as characterising the present invention and the significative characterising features associated with the present invention are that prerequisites have hereby been created for moving said mould paris to a fully united position and exposing a "cavity", the volume of said cavity is chosen smaller than the volume of a compressed cellulose material structure and the volume of a chosen glue liquid content, and that said glue liquid content is chosen sufficient for, under pressure from said mould parts, fully moistening said compressed cellulose material structure. Said glue liquid content is chosen more or less in excess, so that a small glue liquid content may come oozing out from said cavity, at said fully united position.

### BRIEF DESCRIPTION OF THE ACCOMPANYING DRAWINGS

Currently proposed embodiments, displaying the significative characterising features associated with a method and an arrangement, related to the present invention, will now be described in greater detail hereinbelow for purposes of exemplification and with reference to the accompanying Drawings. In the accompanying Drawings:
- **Figure 1**: is showing in blocks an arrangement and a method according to the present invention,
- **Figures 2A and 2B**: show a first and a second alternative of a fluffy material structure and a glue liquid content, applied in two layers, and where Fig. 2B illustrates the use of a support film,
- **Figure 3**: is showing a further alternative of a fluffy material structure and a given liq- uid content applied in additional layers,
- **Figure 4**: is a side view of two mould parts in an opened position,
- **Figure 5**: is a side view of two mould parts in an opened position, having the fluffy ma- terial structure and the glue liquid content fully premixed and supported by a flexible carrier material, and
- **Figure 6**: is a side view where the two mould parts, as shown in Fig. 5, is almost in a fully united and interacting position.
- **Figure 7**: illustrates in three sequences, under "A", "B" and "C" a production of an object from a given glue-fluffy material mixture compressed by using a female and a male part.

### DESCRIPTION OF CURRENTLY PROPOSED EMBODIMENT

It should be emphasized by way of introduction that, in the following description of currently proposed embodiments which display the significative characterising features relating to the present invention and which are clarified by means of the Figures, shown in the accompanying Drawings, we have selected terms and special terminology with the intention principally of clarifying the inventive concept.

However, in this context it should be observed that the expressions selected here should not be considered as restrictive exclusively to the terms selected and utilised here but it should be understood that each thus selected term is to be interpreted so that, in addition, it encompasses all technical equivalents which function in the same or substantially the same manner in order thereby to be able to attain the same or substantially the same intention and/or technical effect.

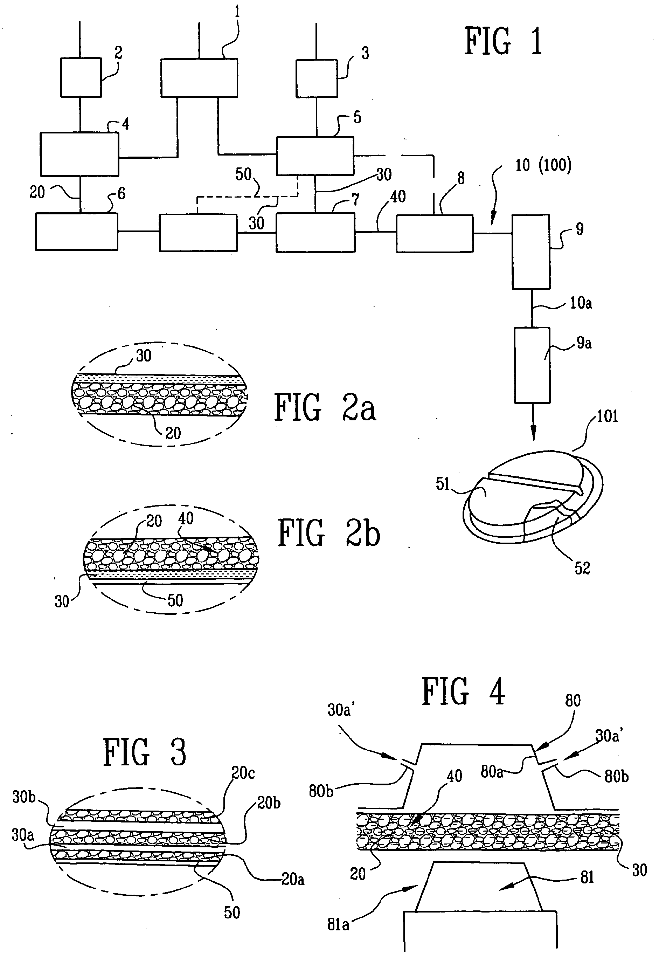

With reference to the accompanying Drawings and the Figs. 1 to 6, the basic preconditions for a method and an arrangement of the present invention are thus shown schematically and in detail and where the significative properties associated with the invention have been rendered in concrete form, as a result of the now proposed embodiments described in greater detail hereinbelow.

Thus in Fig. 1 the different blocks are intended to identify different means, apparatuses and functions, all related to the inventive method and its arrangement.

In Fig. 1 reference numeral 1 indicates a control unit; reference numeral 2 a fluffy material structure feeding equipment; reference numeral 3 a glue liquid content feeding equipment; reference numeral 4 a fluffy material structure dosage apparatus; and reference numeral 5 a glue liquid content dosage apparatus.

An arrangement 6 is illustrated for spreading said fluffy material structure 20 with a predetermined thickness and an arrangement 7 is illustrated for spreading said glue liquid material or content 30 over said fluffy material structure 20, as illustrated in Fig. 2A.

In Fig. 2B the fluffy material structure 20 is supported by a layer 30 of a glue liquid content. Said glue liquid content 30 is directly supported by an elastic film 50.

A mixture 40, shown in Figs. 2A or 2B is compressed according to the present invention in a compression moulding procedure, indicated by reference numeral 8 in Fig. 1 for the production of a product 10 or an object (100), alternatively a number of products 10 or a number of objects (100).

These products 10 may be seen as semi-materials and adapted for an after-treatment in a further compression moulding procedure or step 9, for compressing the shape of the product 10 into a second product 10a and drying said product 10a.

A further after-treatment procedure or step 9a is used for covering the product 10 or 10a with an elastic film or foil, for the production of a water resistant object 100, here illustrated as a plate.

The fluffy material structure 20 and the glue liquid content 30 may as an alternative be as a mixture 40.

Fig. 3 discloses an alternative, in which a flexible carrier material 50 is directly support-ing a first thin fluffy material structure 20a, a first thin glue liquid material 30a, a second thin fluffy material structure 20b, a second thin glue liquid material 30b and a third thin fluffy material structure 20c.

It is obvious that different layers may be used and it is also possible to inject the glue liquid material 30 directly into the compression chamber of the compression moulding procedure 8 during or prior to a final compression.

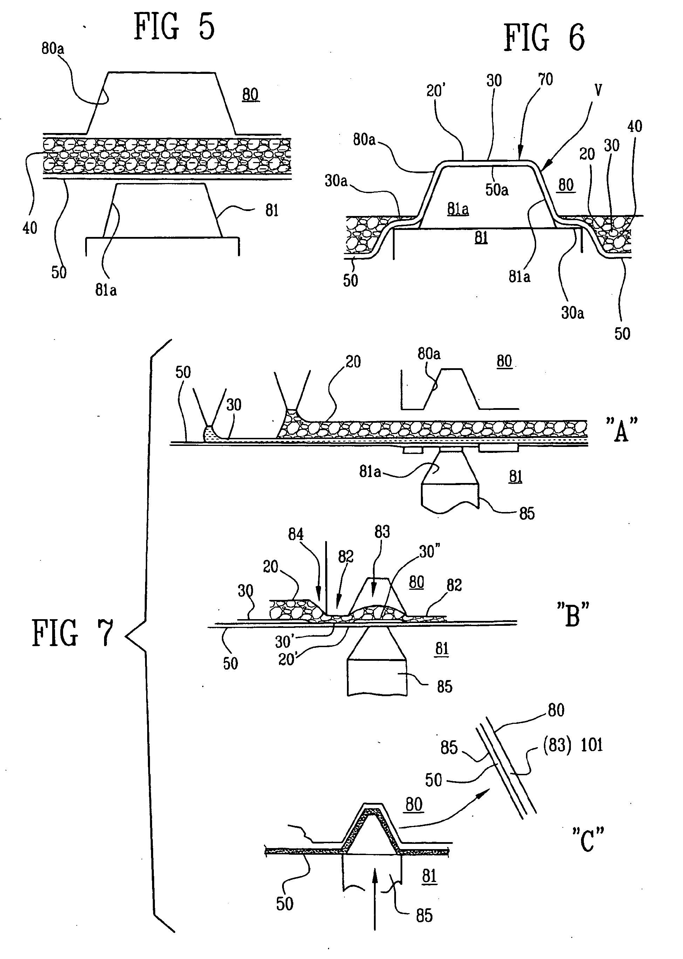

Thus, Fig. 1 shows a method and an arrangement for the production of one or several products 10 or one or several objects 100, by means of a compression moulding procedure 8, using at least two mould parts, one female part 80 and one male part 81, arranged movably towards and away from each other, whereby said mould parts, in a fully united and interacting position (essentially illustrated in Fig. 6), is exposing an inner "cavity", with defining surfaces or wall sections, following the shape of said product 10 or said object 100.

In Fig. 4 the inner surface or wall section, in the form of a frustum of a cone, 80a and the outer surface or wall section 81a are exposing matching surfaces for forming said product 10.

The method and the arrangement disclose that;
a) a layer 20 of a fluffy material structure with a glue liquid content 30 or a mixture 40 is to be introduced between opened mould parts 80, 81, as shown in Fig. 4,
b) said mould parts 80, 81 are by not shown means caused to be moved towards each other, to a position disclosed in Fig. 6, to enclose said fluffy material structure 20 and a chosen glue liquid content 30, here pressure mixed,
c) said fluffy material structure 20 and said glue liquid content 30 are displaced towards and into said cavity 70, in order to pressing said fluffy material structure portion 20 into a compressed cellulose material structure 20' with said glue liquid content 30, by a male part 81 related wall section 81a, against an inner surface or wall section 80a of said female part 80, and
d) the mould parts 80, 81 are thereafter moved towards an open position, to expose and extract said product 10 or said object 100.

Fig. 5 illustrates that the fluffy material structure and the glue liquid content are premixed 40 and supported by a film 50.

The present invention discloses especially that when said mould parts 80, 81 are moved to said fully united position and exposing said cavity 70, the volume "V" of said cavity 70 is chosen smaller than the volume of said compressed cellulose material structure 20' and said chosen glue liquid content 30, and that the volume of said glue liquid content 30 is chosen sufficient for, under the pressure from said mould parts 80, 81, fully moistening said compressed cellulose material structure 20'.

The expression "fully moistening" is meant that the chosen volume of glue liquid content 30, controlled by said control unit 1, is sufficient for filling all pores, or essentially all pores, within the porosities of the fluffy material in its compressed form 20', so that the outer and the inner surfaces of said product 10 are intact.

Said product 10 may be subject to a further treatment 9, 9a, for forming the outer and/or the inner shape of the product 10, 10a, towards a final form of an object 100.

The present invention discloses that said glue liquid content 30 is chosen in excess, so that a small glue liquid content 30a may be coming oozing out from said cavity 70, at said fully united position.

Excess glue liquid content 30a' may also be oozing out through holes 80b in the wall section 80a, as illustrated in Fig. 4.

Said glue liquid content 30 and said compressible fluff material structure 20 may be distributed as one or more thicker or thinner layers over a flexible carrier material 50.

Forming any semi-manufacture of said product 10 or said object 100, moistened to a "saturation" stage, may be caused by placing said semi-manufacture product 10 or object in a subsequent equipment (not shown) for drying and/or setting said glue liquid content for forming a solid product 10a or object.

More precisely, a utilised glue liquid content 30 is selected via said control unit 1 to have a viscosity of less than 500 mPas, such as between 50 and 200 mPas.

More precisely, said viscosity is selected to be between 100 and 150 mPas.

A viscous glue particle substrate of a high viscosity may be diluted, using an additive in order to, in a mixed state, display said viscosity.

Said diluent solution of said additives is of low viscosity, such as water and the like.

Moreover, a glue liquid content 30, enclosed between mould parts 80, 81, may be injected into a fluffy material structure and/or premixed therewith, as indicated by a dotted line 5a in Fig. 1.

Said male part 81 is in the Fig. 6 embodiment adapted to be displaced upwardly, in order to lift a flexible carrier section 50a with associated moistened fluff material structure, enclosed between said mould parts 80, 81, into and towards a female part 80, located above said carrier section 50a.

Another embodiment, not shown, however obvious, discloses that said male part 81 is adapted to be displaced downwardly, in order to urge a fluffy material structure 20, a glue liquid content 30 or a mixture 40 thereof, enclosed between said mould parts 80, 81, and a flexible carrier section 50a downwards, towards and into a female part, located beneath said carrier section.

A moistened semi-manufacture 10 may be a product treated via prior compression moulding in one or more compression moulding steps (not shown), before said semi-manufacture product 10 is processed in a drying and/or setting equipment 9.

A compression moulding procedure, in one or more additional compression moulding procedure steps 9, takes place by one or more moulding parts distributed between said compression moulding procedure 8 and a drying and/or setting step 9, forming said semi-manufacture product towards an object 100.

A semi-manufacture product and/or a dried semi-manufactured product 10a is finally formed, as a completed object 100, by an intermediary one or more subsequently oriented compression and/or punching stations.

Figure 1 discloses that a tray or a plate configuration 101 is imparted to said semi-manufacture and/or said object.

Resin, water glass, starch or the like is wholly or partly selected as said glue liquid content 30, for all materials serving as an adhesive material adapted to a used cellulose fluff structure 20.

It is also suggested that an adhesive or glue material, having a high total solid content, is selected as said glue liquid content 30.

The glue liquid content, its volume as well as a chosen fluffy material structure are adapted to expose the desired size, thickness and/or stiffness of the product 10 or object 100.

The Fig. 1 embodiment also discloses that, in a subsequent process step 9a, a very thin plastic film 51, in addition to said carrier material 50, is secured to one side of a dried and ready-treated semi-manufacture 10a, in order to form a solid product or object 101.

A subsequent additional plastic film 52 and a carrier section of said carrier material 50 are secured, by means of a heating process 9a of said semi-manufacture 10a, and where a required compression force, against an inner portion of said semi-manufacture, takes place at an excess air pressure arrangement.

During said compression step 8 forming a semi-manufacture product 10, the glue liquid content in excess 30a is distributed to and saturating said fluffy material structure 20' so that any occurring porosities, free of fluffy material, are filled out with said adhesive glue liquid content 30.

Said elastic films 50, 51 and 52 being selected from a plastic material, for example a polyester, a bio film, a thermoplastic film or other similar material.

Said fluffy material structure 20 being selected from a material consisting of a pure cellulose fluffy structure and/or a mixture of one or more cellulose fluffy materials and a selected filler material, such as a selected chalk, synthetic fibre material or the like.

It is also suggested that said fluffy material structure 20 and the glue liquid content 30 are distributed as a first layer of a pure or admixed fluffy material structure and a second layer of a glue liquid content, placed and distributed over said first layer.

Said fluffy material structure and the glue liquid content are distributed as a single layer of a pure or admixed fluffy material structure, admixed with a glue adhesive or liquid content quantity.

Said fluffy material structure and the glue liquid content are distributed as a single layer of a pure or admixed fluffy material structure and a layer of a glue liquid content, placed and distributed under said fluffy material structure.

More precisely, said fluffy material structure is layered with interjacent oriented glue liquid content layers and/or reinforcing layers.

A semi-manufacture product is displaying a structure and is given a stiffness adapted so as to be able to be intact, when displacing a number of laterally oriented semi-manufacture products where all are carried and supported by said carrier to an adjacent drying and/or setting equipment 9, 9a.

After a processing step, for forming a number of laterally related soft semi-manufacture products 10 with the aid of an elastic or flexible carrier 50, there are additional forming steps for the produced semi-manufacture products 10 towards a finished object 100.

Said additional forming steps towards a finished object 100 consists of causing, by means of object-supplied heat, a plastic film and/or other selected surface coatings to melt and/or fuse.

Said plastic film and/or said additional surface coating is fixable, in order to form a finished product and/or a finished object 100, via an applied excess air pressure, which urges the film and/or the surface coating against the product, and where said film or surface coating is adapted, by object-supplied heat and said applied excess pressure, to more or less melt and fuse against the inner surface of the product or the object 100.

An equipment 9a, adapted for drying and/or setting said glue liquid content, consists of a unit based on microwave heating.

One or more of said compression moulding stations are adapted to cause, by using compressed air, said moistened semi-manufacture product to be additionally formed by using an elastic membrane, which is urged into said female part 80.

One or more of said subsequent compression stations are adapted to cause, by using compressed air, the dry semi-manufacture to be covered by an elastic membrane or film which is urged into a heated object via the female part.

Figure 7 is intended to illustrate in three different sequences, "A", "B" and "C", a production line for the production of one (or more) objects 101 from a glue-fluff-material mixture, said mixture is compressed between an upper female part 80 and a lower male part 81, with a piston part 85 of a compression equipment.

Sequence "A" illustrates that a layer of a liquid glue material 30 is spread over and supported by an elastic plastic film 50.

Over said glue material 30 is spread a fluffy material 20 and the content of said glue material 30 and the content of said fluffy material 20 are adapted in accordance with the principles related to the present invention and discussed previously.

The glue material 30 and the fluffy material 20 are transported to the right in Figure 7 and between opened parts 80 and 81, and by said plastic film 50 or other similar means.

In a sequence "B" said female part 80 is moved towards said male part 81 and is thereby causing a pre-compressed zone 82 of said glue material 30' and said fluffy material 20', in which zone 82, said materials 30' and 20' are more or less totally mixed.

In zones 83, 84, adjacent said pre-compressed zone 82, no compression at all or very small compression is at hand by said movement.

This pre-compression zone 82 may further expose criteria allowing a small amount of glue material 30" in excess from zone 83 to fully or partly pass through said zone 82.

Sequence "C" illustrates that said piston part 85 has been moved upwardly and into the female part 80 under a compression of the zone 83 to form said object 101.

Excess glue material 30" may also be caused to pass through holes in part 80 (see Figure 4) in a final compression sequence towards forming said object 101.

The present invention is naturally not restricted to the embodiment disclosed by way of example above but may be subject to modifications without departing from the inventive concept, as disclosed in the appended claims.

## Claims

1. A method for producing at least one products or at least one object starting from a fibrous cellulosic fluffy material by means of a compression molding procedure (8) using at least two mould parts, one female part (80) and one male part (81), arranged movably towards and away from each other, whereby when said mould parts are in a closed position, an inner cavity (70) is defined, presenting surfaces or wall sections (80a, 81a), following the shape of said product (10) or said object (100), whereby;
a) a layer of fibrous cellulosic fluffy material structure (20) and a chosen glue liquid content (30) is introduced between the opened mould parts (80, 81);
b) said mould parts (80, 81) are moved towards each other in the closed position to enclose said fluffy material structure (20) and a the chosen glue liquid content (30),
c) said fibrous cellulosic fluffy material structure (20) and said glue liquid content (30) are displaced towards and into said cavity (70) in order to press said cellulosic fluffy material structure (20) and said glue liquid content (30) into a compressed cellulose material structure (20') by a male part (81) related wall section (81a) against an inner surface or wall section (80a) of said female part (80), and
d) the mould parts (80, 81) are moved towards an open position, to expose and extract said product (10) or said object (100),
**characterized in that** when said mould parts (80, 81) are moved to said closed position and define said cavity (70), the volume of said cavity (70) is chosen smaller than the volume of said fibrous cellulosic fluffy material structure (20) and the volume of said chosen glue liquid content (30), and that said glue liquid content (30) is chosen sufficient for, under pressure of said mould parts (80, 81), fully moistening said compressed cellulose material structure (20'), whereby the excess said glue liquid content (30) is chosen in excess, so that the excess glue liquid content (30a) is oozing out from cavity (70) when said mould parts are in the closed position.

2. A method according to claim 1, **characterized in that** said at least one product is subjected to a further treatment (9, 9a), for forming the outer and/or the inner shape of the product, to form of an object (100).

3. A method according to Claim 1, **characterized in that** said glue liquid content and said compressible fluff material structure are distributed as layers over a flexible carrier material.

4. A method according to Claim 1, **characterized in** forming a semi-manufacture of said product or said object, moistened to a "saturation' stage, and placing said semi-manufacture product (10) or object in a subsequent equipment (9, 9a) for drying and/or setting said glue liquid content for forming a solid product or object.

5. A method as claimed in the preceding Claims 1, **characterized in that** a utilized glue liquid content is selected to have a viscosity of less than 500 mPas, such as between 50 and 200 mPas.

6. A method as claimed in Claim 1, **characterized in that** said male part is adapted to be displaced upwardly, in order to lift a flexible carrier section with associated moistened fluff material structure, enclosed between said mould parts, into and towards a female part, located above said carrier section or
said male part is adapted to be displaced downwardly, in order to urge a fluff material structure and a glue liquid content, enclosed between mould parts, and a flexible carrier section downwards and towards and into a female part, located beneath said carrier section.

7. A method as claimed in Claim 1, **characterized in that** a semi-manufacture product and/or a dried semi-manufactured product is finally formed, as a completed object, by an intermediary one or more subsequently oriented compression and/or punching stations.

8. A method as claimed in Claim 1, **characterized in that**, in a subsequent process step, a plastic film, in addition to said carrier material, is secured to one side of a dried and ready-treated semi-manufacture, in order to form a solid product or object.

9. A method as claimed in Claim 9, **characterized in that** a subsequent additional plastic film and a carrier section of said carrier material are secured, by means of heating process of said semi-manufacture, and where a compression force, against an inner portion of said semi-manufacture, takes place at an excess air pressure arrangement.

10. A method as claimed in Claim 1, **characterized in that** said fluff material structure being selected from a material consisting of a pure cellulose fluff structure and/or a mixture of one or more cellulose fluff materials and/or a selected filler material, and as such a filler material is selected chalk, synthetic fibre material or the like.

11. A method as claimed in Claim 1, **characterized in that** said fluff material structure is layered with interposed oriented glue liquid content layers and/or reinforcing layers.

12. A method according to any of the previous claims, wherein the excess glue liquid content (30a') oozes out through holes (80b) in the wall section (80a) of the mould parts.

13. A method according to claim 1, wherein the chosen volume of the glue liquid content is chosen sufficient for essentially filling all pores within the porosity of the fluffy material in its compressed form (20'), so that outer and inner surfaces of said product are intact.

14. An arrangement for producing at least one products or at least one object starting from a fibrous cellulosic fluffy material by means of a compression molding procedure, using at least two mould parts, one female part and one male part, arranged movably by first means towards and away from each other, whereby when said mould parts are in a closed position, an inner cavity (70) is defined, presenting surfaces or wall sections, following the shape of said product or said object, whereby,
a) a layer of a fibrous cellulosic fluffy material structure (20) and a chosen glue liquid content (30) is, by a second means, introduced between opened mould part (80, 81),
b) said mould parts are, by a third means, moved towards each other in the closed position to enclose said fibrous cellulosic fluffy material structure and the chosen glue liquid content,
c) said fibrous cellulosic fluffy material structure and said glue liquid content are, via a fourth means, displaced towards and into said cavity, in order to press said fibrous cellulosic fluffy material structure (20) and said glue liquid content (30) into a compressed cellulose material structure (20') by a male part related wall section, against an inner surface or wall section of said female part, and
d) the mould parts are, via said first means moved towards an open position, to expose and extract said product or said object **characterized in that** when said mould parts are, via said first means, moved to said closed position and define said cavity, the volume of said cavity is smaller than the volume of said fibrous cellulosic fluffy material structure and the volume of said chosen glue liquid content, and that said glue liquid content is chosen sufficient for, under pressure of said mould parts, fully moistening said compressed cellulose material structure, whereby said glue liquid content (30) is chosen in excess, so that the excess glue liquid content (30a) is oozing out from cavity (70) when said mould parts are in the closed position and the excess glue liquid content (30a') oozes out through holes (80b) in the wall section (80a) of the mould parts.

## Patentansprüche

1. Verfahren zur Herstellung mindestens eines Produkts oder mindestens eines Objekts, beginnend mit einem flockigen, cellulosehaltigen, faserigen Material mithilfe eines Formpressvorgangs (8) unter Verwendung mindestens zweier Formteile, einer Matrize (80) und einer Patrize (81), die aufeinander zu und voneinander weg beweglich angeordnet sind, wobei, wenn die Formteile in einer geschlossenen Position sind, eine innere Kavität (70) definiert wird, die Oberflächen bzw. Wandabschnitte (80a, 81a) aufweist, die der Form des Produkts (10) oder des Objekts (100) folgt, wobei
a) eine Schicht einer faserigen, cellulosehaltigen, flockigen Materialstruktur (20) und ein gewählter Kleberflüssigkeitsgehalt (30) zwischen die geöffneten Formteile (80, 81) eingeführt werden;
b) die Formteile (80, 81) in der geschlossenen Position aufeinander zu bewegt werden, um die flockige Materialstruktur (20) und den gewählten Kleberflüssigkeitsgehalt (30) einzuschließen;
c) die faserige, cellulosehaltige, flockige Materialstruktur (20) und der Kleberflüssigkeitsgehalt (30) auf die Kavität (70) zu und dort hinein verschoben werden, um die cellulosehaltige, flockige Materialstruktur (20) und den Kleberflüssigkeitsgehalt (30) in eine zusammengepresste cellulosehaltige Materialstruktur (20') durch einen mit einer Patrize (81) zusammengehörigen Wandabschnitt (81a) gegen eine innere Oberfläche bzw, einen Wandabschnitt (80a) der Matrize (80) zu pressen, und
d) die Formteile (80, 81) zu einer offenen Position bewegt werden, um das Produkt (10) oder das Objekt (100) freizulegen und zu entnehmen,
**dadurch gekennzeichnet, dass**, wenn die Formteile (80, 81) in die geschlossene Position bewegt werden und die Kavität (70) definieren, das Volumen der Kavität (70) kleiner als das Volumen der faserigen, cellulosehaltigen, flockigen Materialstruktur (20) und des Volumens der gewählten Kleberflüssigkeitsgehalts (30) gewählt wird, und dass der Kleberflüssigkeitsgehalt (30) ausreichend, unter Druck der Formteile (80, 81), für das vollständige Benetzen der zusammengepressten cellulosehaltigen Materialstruktur (20') gewählt wird, wobei der Kleberflüssigkeitsgehalt (30) überschüssig gewählt wird, sodass der überschüssige Kleberflüssigkeitsgehalt (30a) aus der Kavität (70) herausquillt, wenn die Formteile in der geschlossenen Position sind.

2. Verfahren nach Anspruch 1, **dadurch gekennzeichnet, dass** das mindestens eine Produkt einer weiteren Behandlung (9, 9a) zum Formen der äußeren und/oder inneren Form des Produkts unterzogen wird, um ein Objekt (100) zu formen.

3. Verfahren nach Anspruch 1, **dadurch gekennzeichnet, dass** der Kleberflüssigkeitsgehalt und die zusammenpressbare flockige Materialstruktur als Schichten über einem flexiblen Trägermaterial verteilt werden.

4. Verfahren nach Anspruch 1, das durch ein Formen eines Halbfabrikats des Produkts oder Objekts, das bis zu einer Stufe der "Sättigung" benetzt wird, und ein Platzieren des Halbfabrikatprodukts (10) oder -objekts in einer nachfolgenden Einrichtung (9, 9a) zum Trocknen und/oder Erstarren des Kleberflüssigkeitsgehalts zum Formen eines festen Produkts oder Objekts **gekennzeichnet** ist.

5. Verfahren nach dem vorangehenden Anspruch 1, **dadurch gekennzeichnet, dass** ein verwendeter Kleberflüssigkeitsgehalt ausgewählt wird, der eine Viskosität von weniger als 500 mPas, wie beispielsweise zwischen 50 und 200 mPas, aufweist.

6. Verfahren nach Anspruch 1, **dadurch gekennzeichnet, dass** die Patrize dazu geeignet ist, aufwärts verschoben zu werden, um einen flexiblen Trägerabschnitt mit einer damit verbundenen benetzten flockigen Materialstruktur, die zwischen den Formteilen eingeschlossen sind, in eine Matrize, die sich über dem Trägerabschnitt befindet, hinein und darauf zu anzuheben, oder die Patrize dazu geeignet ist, abwärts verschoben zu werden, um eine flockige Materialstruktur und einen Kleberflüssigkeitsgehalt, die zwischen Formteilen eingeschlossen sind, zu verdrängen und ein flexibler Trägerabschnitt abwärts und auf eine Matrize, die unter dem Trägerabschnitt liegt, zu und dort hinein.

7. Verfahren nach Anspruch 1, **dadurch gekennzeichnet, dass** ein Halbfabrikatprodukt und/oder ein getrocknetes Halbfabrikatprodukt schließlich durch eine oder mehrere dazwischenliegende nachfolgend orientierte Press- und/oder Stanzstationen als ein fertiggestelltes Objekt geformt wird.

8. Verfahren nach Anspruch 1, **dadurch gekennzeichnet, dass** in einem nachfolgenden Prozessschritt zusätzlich zum Trägermaterial eine Kunststofffolie an einer Seite eines getrockneten und fertigbehandelten Halbfabrikats befestigt wird, um ein festes Produkt oder Objekt zu formen.

9. Verfahren nach Anspruch 8, **dadurch gekennzeichnet, dass** eine nachfolgende zusätzliche Kunststofffolie und ein Trägerabschnitt des Trägermaterials, mithilfe eines Erhitzungsprozesses des Halbfabrikats, befestigt werden, und in dem eine Presskraft, gegen einen inneren Abschnitt des Halbfabrikats, an einer Luftüberschuss-Druckanordnung stattfindet.

10. Verfahren nach Anspruch 1, **dadurch gekennzeichnet, dass** die flockige Materialstruktur aus einem Material ausgewählt wird, das aus einer reinen Celluloseflockenstruktur und/oder einer Mischung einer oder mehrerer Celluloseflockenmaterialien und/oder einem ausgewählten Füllmaterial besteht, und als solch ein Füllmaterial Kreide, synthetisches Fasermaterial oder ähnliches ausgewählt wird.

11. Verfahren nach Anspruch 1, **dadurch gekennzeichnet, dass** die Flockenmaterialstruktur mit dazwischen eingefügt orientierten Kleberflüssigkeitsgehaltschichten und/oder verstärkenden Schichten geschichtet ist.

12. Verfahren nach einem der vorangehenden Ansprüche, wobei der überschüssige Kleberflüssigkeitsgehalt (30a') durch Löcher (80b) im Wandabschnitt (80a) der Formteile herausquillt.

13. Verfahren nach Anspruch 1, wobei das gewählte Volumen des Kleberflüssigkeitsgehalts ausreichend für das weitgehende Füllen aller Poren innerhalb der Porosität des flockigen Materials in seiner zusammengepressten Form (20') gewählt wird, so dass äußere und innere Oberflächen des Produkts intakt sind.

14. Anordnung zur Herstellung mindestens eines Produkts oder mindestens eines Objekts, beginnend mit einem faserigen, cellulosehaltigen, flockigen Material mithilfe eines Formpressvorgangs unter Verwendung mindestens zweier Formteile, einer Matrize und einer Patrize, die durch erste Mittel aufeinander zu und voneinander weg beweglich angeordnet sind, wobei, wenn die Formteile in einer geschlossenen Position sind, eine innere Kavität (70) definiert wird, die Oberflächen bzw. Wandabschnitte aufweist, die der Form des Produkts oder des Objekts folgt, wobei
a) eine Schicht einer faserigen, cellulosehaltigen, flockigen Materialstruktur (20) und ein gewählter Kleberflüssigkeitsgehalt (30) durch ein zweites Mittel zwischen die geöffneten Formteile (80, 81) eingeführt wird;
b) die Formteile (80, 81) durch ein drittes Mittel in der geschlossenen Position aufeinander zu bewegt werden, um die faserige, cellulosehaltige, flockige Materialstruktur und den gewählten Kleberflüssigkeitsgehalt einzuschließen;
c) die faserige, cellulosehaltige, flockige Materialstruktur und der Kleberflüssigkeitsgehalt durch ein viertes Mittel auf die Kavität (70) zu und dort hinein verschoben werden, um die faserige, cellulosehaltige, flockige Materialstruktur (20) und den Kleberflüssigkeitsgehalt (30) durch einen mit einer Patrize (81) zusammengehörigen Wandabschnitt gegen eine innere Oberfläche bzw. einen Wandabschnitt der Matrize zu pressen, und
d) die Formteile durch die ersten Mittel zu einer offenen Position bewegt werden, um das Produkt oder das Objekt freizulegen und zu entnehmen, **dadurch gekennzeichnet, dass**, wenn die Formteile durch die ersten Mittel in die geschlossene Position bewegt werden und die Kavität definieren, das Volumen der Kavität kleiner als das Volumen der faserigen, cellulosehaltigen, flockigen Materialstruktur und des Volumens des gewählten Kleberflüssigkeitsgehalts ist und dass der Kleberflüssigkeitsgehalt ausreichend, unter Druck der Formteile, für das vollständige Benetzen der zusammengepressten cellulosehaltigen Materialstruktur gewählt wird, wobei
der Kleberflüssigkeitsgehalt (30) überschüssig gewählt wird, sodass der überschüssige Kleberflüssigkeitsgehalt (30a) aus der Kavität (70) herausquillt, wenn die Formteile in der geschlossenen Position sind und der überschüssige Kleberflüssigkeitsgehalt (30a') durch Löcher (80b) im Wandabschnitt (80a) der Formteile herausquillt.

## Revendications

1. Méthode pour fabriquer au moins un produit ou au moins un objet à partir d'une matière fibreuse cellulosique duveteuse au moyen d'un procédé de moulage par compression (8), avec au moins deux parties de moule, une partie femelle (80) et une partie mâle (81), disposées de façon mobile se rapprochant et s'éloignant l'une de l'autre, dans laquelle, quand lesdites parties de moule se trouvent en position fermée, il se forme une cavité interne (70), présentant des surfaces ou des sections murales (80a, 81a), selon la forme dudit produit (10) ou dudit objet (100), dans laquelle;
a) une couche formée d'une structure en matière fibreuse cellulosique duveteuse (20) et un contenu liquide collant choisi (30) sont introduite entre les parties de moule ouvertes (80, 81) ;
b) lesdites parties de moule (80, 81) se rapprochent l'une de l'autre dans la position fermée pour enfermer ladite structure en matière duveteuse (20) et le contenu liquide collant choisi (30),
c) ladite structure en matière fibreuse cellulosique duveteuse (20) et ledit contenu liquide collant (30) se dirigent en direction de et à l'intérieur de ladite cavité (70), afin de compresser ladite structure en matière cellulosique duveteuse (20) et ledit contenu liquide collant (30) dans une structure en matière cellulosique comprimée (20'), par une section murale (81a) relative à la partie mâle, contre une surface interne ou section murale (80a) de ladite partie femelle (80), et
d) les parties de moule (80, 81) se dirigent vers une position ouverte pour exposer et pour extraire ledit produit (10) ou ledit objet (100),
**caractérisée en ce que**, quand lesdites parties de moule (80, 81) se dirigent vers ladite position fermée et forment ladite cavité (70), le volume de ladite cavité (70) est choisi plus petit que le volume de ladite structure en matière fibreuse cellulosique duveteuse (20) et du volume dudit contenu liquide collant choisi (30), et **en ce que** ledit contenu liquide collant (30) est choisi suffisant pour, sous pression desdites parties de moule (80, 81), mouiller totalement ladite structure en matière cellulosique comprimée (20'), dans laquelle
ledit contenu liquide collant (30) est choisi en excès, de sorte que le contenu liquide collant en excès (30a) déborde de la cavité (70), quand lesdites parties de moule se trouvent dans la position fermée.

2. Méthode selon la revendication 1, **caractérisée en ce que** ledit au moins un produit est soumis à un autre traitement (9, 9a) pour former la forme externe et/ou interne du produit, afin de réaliser un objet (100).

3. Méthode selon la revendication 1, **caractérisée en ce que** ledit contenu liquide collant et ladite structure en matière duveteuse compressible sont distribués en couches au-dessus d'une matière porteuse souple.

4. Méthode selon la revendication 1, **caractérisée en ce qu'**elle forme un semi-fini dudit produit ou dudit objet, mouillé à un niveau de « saturation », et **en ce qu'**elle place ledit produit (10) ou objet semi-fini dans un équipement successif (9, 9a) pour sécher et/ou pour durcir ledit contenu liquide collant, afin de former un produit ou objet solide.

5. Méthode selon la revendication précédente 1, **caractérisée en ce qu'**un contenu liquide collant employé est sélectionné pour avoir une viscosité inférieure à 500 mPas, comme entre 50 et 200 mPas.

6. Méthode selon la revendication 1, **caractérisée en ce que** ladite partie mâle peut se déplacer vers le haut, afin de soulever une section porteuse souple avec une structure en matière duveteuse mouillée associée, enfermées entre lesdites parties de moule, à l'intérieur et en direction d'une partie femelle, située au-dessus de ladite section porteuse, ou **en ce que** ladite partie mâle peut se déplacer vers le bas, afin de pousser une structure en matière duveteuse et un contenu liquide collant, enfermés entre des parties de moule, et une section porteuse souple vers le bas et en direction de et à l'intérieur d'une partie femelle, située au-dessous de ladite section porteuse.

7. Méthode selon la revendication 1, **caractérisée en ce qu'**un produit semi-fini et/ou un produit semi-fini séché est finalement formé, comme un objet fini, par un ou plusieurs postes de compression et/ou de matriçage intermédiaires successifs.

8. Méthode selon la revendication 1, **caractérisée en ce que**, dans une étape successive du procédé, un film plastique, outre ladite matière porteuse, est attaché à un côté d'un semi-fini séché et déjà traité, afin de former un produit ou objet solide.

9. Méthode selon la revendication 8, **caractérisée en ce qu'**un autre film plastique successif et une section porteuse de ladite matière porteuse sont attachés, par chauffage dudit semi-fini, et où une force de compression, contre une partie interne dudit semi-fini, se produit sous une disposition de pression d'air excessive.

10. Méthode selon la revendication 1, **caractérisée en ce que** ladite structure en matière duveteuse étant choisie parmi une matière consistant en : une structure de pure cellulose duveteuse et/ou un mélange d'une ou plusieurs matières cellulosiques duveteuses et/ou une matière d'apport sélectionnée, et de même, une matière d'apport est choisie parmi craie, matière en fibres synthétiques ou similaires.

11. Méthode selon la revendication 1, **caractérisée en ce que** ladite structure en matière duveteuse est disposée en couches avec, interposées, des couches orientées de contenu liquide collant et/ou des couches de renforcement.

12. Méthode selon l'une quelconque des revendications précédentes, dans laquelle le contenu liquide collant en excès (30a') déborde des trous passants (80b), dans la section murale (80a) des parties de moule.

13. Méthode selon la revendication 1, dans laquelle le volume choisi du contenu liquide collant est suffisant pour remplir essentiellement tous les pores, dans les limites de la porosité de la matière duveteuse dans sa forme comprimée (20'), de sorte que les surfaces externe et interne dudit produit sont intactes.

14. Disposition pour fabriquer au moins un produit ou au moins un objet à partir d'une matière fibreuse cellulosique duveteuse au moyen d'un procédé de moulage par compression, avec au moins deux parties de moule, une partie femelle et une partie mâle, disposées de
façon mobile, par des premiers moyens, se rapprochant et s'éloignant l'une de l'autre, dans laquelle, quand lesdites parties de moule se trouvent dans une position fermée, il se forme une cavité interne, présentant des surfaces ou des sections murales, selon la forme dudit produit ou dudit objet, dans laquelle,
a) une couche formée d'une structure en matière fibreuse cellulosique duveteuse (20) et un contenu liquide collant choisi (3), par des seconds moyens, est introduite entre les parties de moule ouvertes (80, 81),
b) lesdites parties de moule se rapprochent, par des troisièmes moyens, l'une de l'autre dans la position fermée pour enfermer ladite structure en matière fibreuse cellulosique duveteuse et le contenu liquide collant choisi,
c) ladite structure en matière fibreuse cellulosique duveteuse et ledit contenu liquide collant se dirigent, par des quatrièmes moyens, en direction de et à l'intérieur de ladite cavité, afin de compresser ladite structure en matière fibreuse cellulosique duveteuse (20) et ledit contenu liquide collant (30), par une section murale relative à la partie mâle, contre une surface interne ou section murale de ladite partie femelle, et
d) les parties de moule se dirigent, par lesdits premiers moyens, vers une position ouverte pour exposer et pour extraire ledit produit ou ledit objet, **caractérisée en ce que**, quand lesdites parties de moule se dirigent, par lesdits premiers moyens, vers ladite position fermée et forment ladite cavité, le volume de ladite cavité est plus petit que le volume de ladite structure en matière fibreuse cellulosique duveteuse et du volume dudit contenu liquide collant choisi, et **en ce que** ledit contenu liquide collant est choisi suffisant pour, sous pression desdites parties de moule, mouiller totalement ladite structure en matière cellulosique comprimée, dans laquelle
ledit contenu liquide collant (30) est choisi en excès, de sorte que le contenu liquide collant en excès (30a) déborde de la cavité (70), quand lesdites parties de moule se trouvent dans la position fermée, et le contenu liquide collant en excès (30a') déborde des trous passants (80b), dans la section murale (80a) des parties de moule.
